# EUROPEAN PATENT APPLICATION

(11) **EP 2 479 543 A1**
(43) Date of publication of application: **25.07.2012**
(21) Application number: 10826591.9
(22) Date of filing: 14.10.2010
(51) Int. Cl.: G01G 17/02, B07C 1/00

(54) **PAPER-MEDIA WEIGHING DEVICE, PAPER-MEDIA WEIGHING METHOD, AND COMPUTER PROGRAM**

(30) Priority: 30.10.2009 JP 2009250145
(71) Applicant: NEC Corporation, Tokyo 108-8001 (JP)
(72) Inventor: KURODA, Hayato, Tokyo 108-8001 (JP); YOSHITANI, Kazuhito, Tokyo 108-8001 (JP)
(74) Representative: Gill, David Alan
(86) International application number: PCT/JP2010/068530
(87) International publication number: WO 2011/052459

(57) **Abstract**

In order to weigh a mail, which is conveyed on a conveying path, accurately without enlarging a whole size of paper sheet weighing apparatus, the paper sheet weighing apparatus includes first handling means which pinches a paper sheet conveyed on the conveying path and stops movement of the paper sheet at a predetermined position in a state that the paper sheet is upright, and weighing means which weighs the paper sheet stopped at the predetermined position. The first handling means conveys the paper sheet, which is weighed by the weighing means, outward from the predetermined position.

## Description

### Technical Field

The present invention relates to a technical field of weighing a paper sheet (sheet-medium) such as a sealed letter, a pamphlet, a mail or the like. In particular, the present invention relates to a technical field of weighing a paper sheet which is conveyed in an upright state.

### Background Art

A mail automatic processing machine to weigh a mail which is a typical paper sheet has been proposed. The mail automatic processing machine determines whether the mail belongs to a standard-size mail or a non-standard-size mail on the basis of a length, a width and a thickness of the mail which is an object for processing. Moreover, the mail automatic processing machine has a function to detect a field of postal rates of the mail which is determined to be the standard-size mail, and to stamp a postmark on the field of the postal rates. Here, the field of postal rates means an area, in which a postal rate charged for posting the mail is indicated by a stamp or the like, on a surface of the mail. According to the recent mail automatic processing machine, it is necessary to weigh the mail in addition to measuring the length, the width and the thickness of the mail. In order to check whether or not the postal rate indicated on the field of postal rates of the mail, which is the object for processing, is correct, it is necessary to weigh the mail.

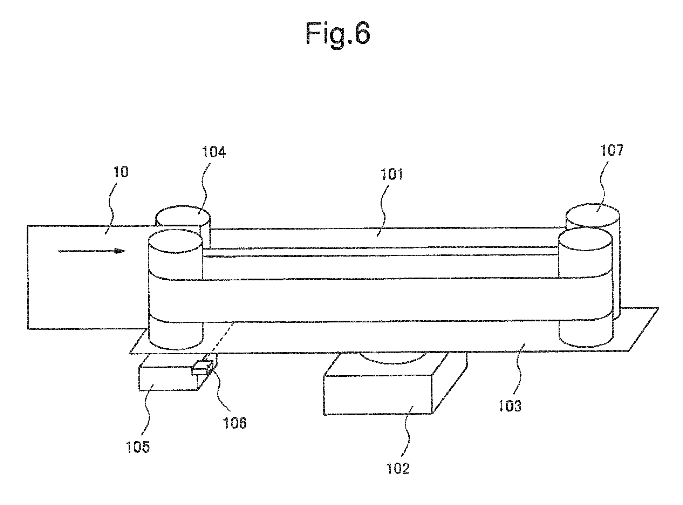

Fig. 6 is an external appearance perspective view showing an example of a mail weighing apparatus which weighs the mail. According to the mail weighing apparatus exemplified in Fig. 6, a conveying belt 101 is put on conveying rollers 104 and 107, and a conveying servomotor 105 makes the conveying roller 104 rotate as shown in Fig.6. Then, the conveying belt 101 rotates in response to the rotation of the conveying roller 104. Moreover, the mail weighing apparatus exemplified in Fig. 6 includes a pair (set) of the mechanisms, which extends to a direction of conveying a mail 10, a conveying path is configured accordingly. The mail 10 is pinched by a pair of the conveying belts 101 and is conveyed in an upright state on the conveying path. As shown in Fig. 6, a weighing base 103 is positioned under the conveying path on which the mail is conveyed by the conveying belt 101. A weight sensor 102 measures weight which presses the weighing base 103. A photoelectric sensor 106 detects that the mail 10, which is conveyed in the upright state on the conveying path, passes a predetermined position.

According to the mail weighing apparatus which has the structure mentioned above, the conveying roller 104 is rotated by the conveying servomotor 105, and the conveying belt 101 is rotated according to the rotation of the conveying roller 104. Then, the weight sensor 102 works in accordance with the photoelectric sensor 106 detects the mail 10. That is, according to the mail weighing apparatus, the weight sensor 102 weighs the mail 10, which is conveyed on the weighing base 103, in a state that the mail is being conveyed by the weighing belt 101.

As described above, the weighing apparatus to weigh the mail, which is conveyed in the upright state, in the state that the mail is being conveyed has been proposed (for example, refer to the patent document 1).
[Patent document 1] Japanese Patent Application Laid-Open No. 2009-133860

### Disclosure of the Invention

### [Problem to be solved by the Invention]

However, in the case of weighing the mail, which is conveyed in the upright state, in the state that the mail is being conveyed, the mail is conveyed on the conveying path even while the mail is weighed. For this reason, according to the mail weighing apparatus as the related art, there is a problem that a whole of the apparatus becomes lengthened in a direction of the conveying path and becomes enlarged. Moreover, according to the mail weighing apparatus as the related art, there is another problem that vibration by a driving mechanism of a conveying unit which conveys the mail causes an influence on accuracy in weighing.

The present invention is conceived in consideration of the problem mentioned above. A main object of the present invention is to provide a paper sheet weighing apparatus or the like which weighs a paper sheet being conveyed in an upright state accurately without enlarging a whole of the apparatus.

### [Means to solve the Problem]

In order to achieve the above-mentioned object, a paper sheet weighing apparatus according to the present invention is characterized by having following configuration.

That is, the paper sheet weighing apparatus according to the present invention includes first handling means for pinching a paper sheet which is conveyed on a conveying path and stopping movement of the paper sheet at a predetermined position in a state that the paper sheet is upright, and weighing means for weighing the paper sheet which is stopped at the predetermined position.

And, the first handling means conveys the paper sheet, which is weighed by the weighing means, outward from the predetermined position.

In the configuration described above, for example, the first handling means includes a pair of pinching members which pinches the paper sheet from both sides that meet right angle toward a direction of the conveying path respectively; and
the paper sheet weighing apparatus further comprises second handling means for separating the pair of the pinching members from the paper sheet in accordance with the pair of the pinching members is stopped movement at the predetermined position in the state that the paper sheet is upright, and afterward driving, in response to the weighing means weighs the paper sheet, the pair of the pinching members so that the pair of the pinching members pinches the paper sheet again.

For example, in the configuration described above further includes control means for controlling operations of the first and the second handling means.

For example, in the configuration described above, after the pair of the pinching members of the first handling means is separated from the paper sheet, the control means controls the second handling means, in response to a completion of weighing the paper sheet by the weighing means, so that the pair of the pinching members pinches the paper sheet again.

The object of the present invention is also achieved by a paper sheet weighing method corresponding to the paper sheet weighing apparatus which has the configuration described above.

Moreover, the object is also achieved by a computer program realizing the paper sheet weighing apparatus, which has the configuration described above, by using a computer, and furthermore the object is also achieved by a computer-readable storage medium which stores the computer program.

### [Effect of the Invention]

According to the present invention described above, it is possible to obtain an exemplary effect that it is possible to weigh the paper sheet being conveyed in the upright state accurately without enlarging a whole of the apparatus.

### Brief Description of the Drawings

[Fig. 1] Fig. 1 is a perspective view exemplifying an external appearance of a mail weighing apparatus according to an exemplary embodiment of the present invention.
[Fig. 2A] Fig. 2A shows structure and an operation (closed state) of an opening and closing unit of the mail weighing apparatus according to the exemplary embodiment.
[Fig. 2B] Fig. 2B shows structure and an operation (opened state) of the opening and closing unit of the mail weighing apparatus according to the exemplary embodiment.
[Fig. 3] Fig. 3 is a block diagram showing system configuration of the mail weighing apparatus according to the exemplary embodiment of the present invention.
[Fig. 4] Fig. 4 is a flowchart showing a process to control the mail weighing apparatus according to the exemplary embodiment.
[Fig. 5] Fig. 5 is a block diagram exemplifying structure in which a control unit of the mail weighing apparatus according to the exemplary embodiment is realized by use of a computer.
[Fig. 6] Fig. 6 is an external appearance perspective view showing an example of the mail weighing apparatus which weighs the mail.

### Exemplary Embodiment to carry out the Invention

Hereinafter, the present invention will be described by an exemplary embodiment, which is applied to a mail as a typical paper sheet, with reference to a drawing.

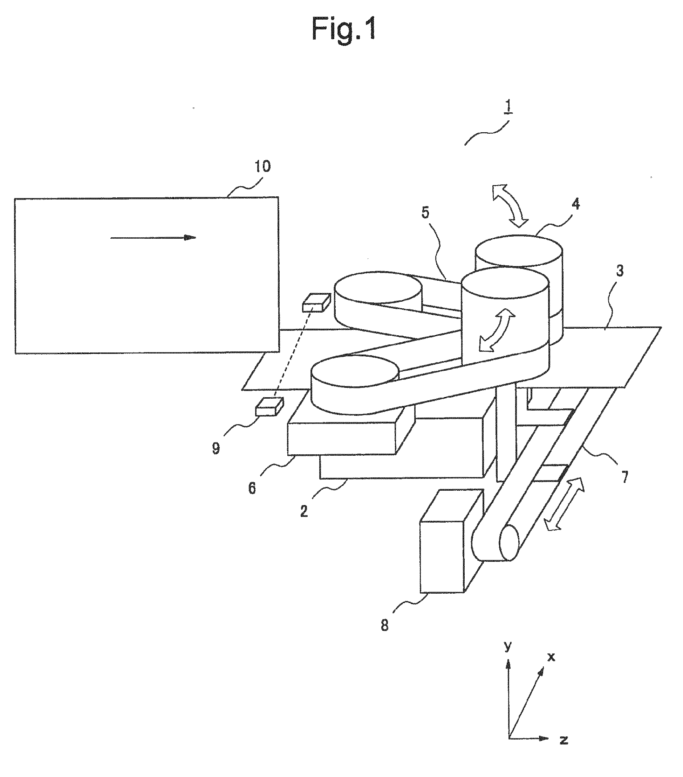

Fig. 1 is a perspective view exemplifying an external appearance of a mail weighing apparatus according to an exemplary embodiment of the present invention. In a broad sense, a mail weighing apparatus 1 shown in Fig. 1 includes a weighing unit (weighing means), a conveying unit (first handling means), and an opening and closing unit (second handling means).

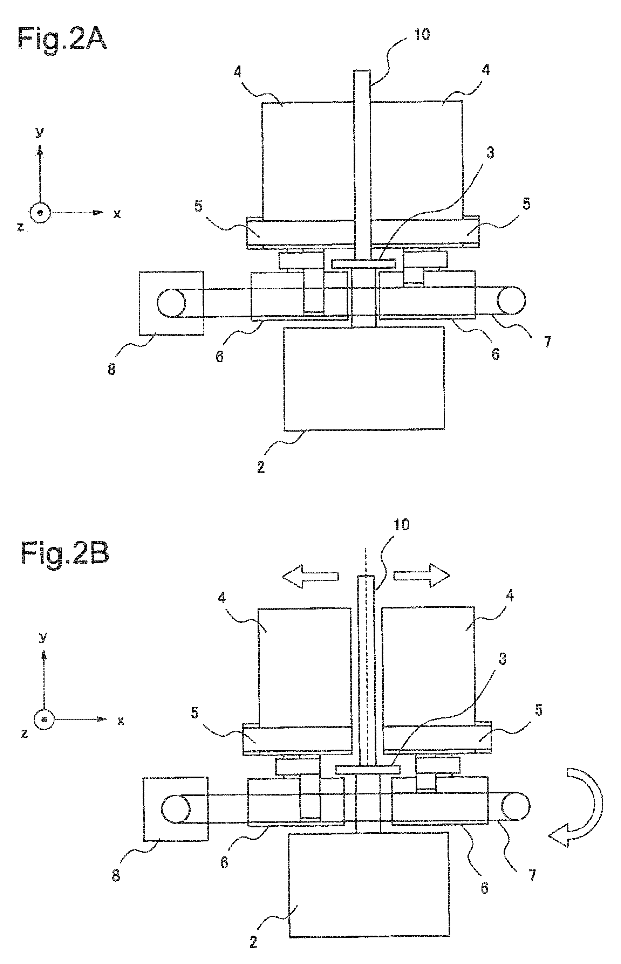

The mail weighing apparatus 1 shown in Fig. 1 is positioned on a conveying path of the mail 10. That is, the mail 10 is conveyed in an upright state (standing state) in a right direction (+Z direction) from a left side of the figure by an upstream side conveying unit (not shown in the figure) as indicated by an arrow in Fig. 2. Then, after the mail 10 is weighed by the mail weighing apparatus 1, the mail 10 is conveyed again, for example, in a right direction on the figure by a downstream side conveying unit (not shown in the figure).

Here, since the upstream side conveying unit and the downstream side conveying unit adopt a mechanism which is available generally at present, detailed description on the conveying units is omitted in the exemplary embodiment. However, it is necessary that the upstream side conveying unit conveys the mail with making the mail 10 is in the upright or almost upright state. On the other hand, it is not always necessary that the downstream side conveying unit conveys the mail 10 in the upright state. The downstream side conveying unit may convey the mail 10 in a necessary direction and in a necessary state according to a processing state of an external apparatus (not shown in the figure) which is positioned on the downstream side.

The weighing unit weighs the mail 10. The weighing unit includes a weight sensor 2 and a weighing base 3. The mail 10, which is conveyed on the conveying path in the upright state, is placed on the conveying base 3. The weight sensor 2 weighs the mail 10 which is placed on the weighing base 3.

The conveying unit includes a roller 4, an acceleration-and-deceleration timing belt (rotating belt) 5, an acceleration-and-deceleration servomotor 6 and a photoelectric sensor 9.

The photoelectric sensor 9 is a detecting means to detect that the mail 10, which is conveyed on the conveying path in the upright state, reaches the weighing base 3 (reach predetermined position). The detecting means is not limited to the photoelectric c type sensor, and it is possible to apply many kinds of sensor if the sensor can detect movement (arrival) of the mail 10.

The roller 4 can rotate around a center axis (not shown in the figure) which extends in a direction of Y axis, and has a columnar shape. In the exemplary embodiment, two (a pair of) rollers 4 function as a pair of pinching members which pinches the mail 10 from both sides that meet right angle toward a direction of the conveying path respectively. That is, in the exemplary embodiment, a pair of the rollers 4, which is driven by the acceleration-and-deceleration servomotor 6 through the acceleration-and-deceleration timing belt 5, pinches the mail 10 from a front side and a back side of the mail 10 (that is, a front side and a back side of Fig. 1 (direction of X axis)) through circumferences of the rollers 4 touching each other to convey the mail 10 in a direction of +Z axis as shown in Fig. 1. That is, the acceleration-and-deceleration timing belt 5 is put on the roller 4 and on the acceleration-and-deceleration servomotor 6 and between the roller 4 and the acceleration-and-deceleration servomotor 6. The acceleration-and-deceleration servomotor 6 drives and rotates the roller 4 through the acceleration-and-deceleration timing belt 5. As shown in Fig. 1, a set of the mechanisms is positioned so that the set of the mechanisms straddle the weighing base 3.

In the conveying unit described above, the roller 4 and the acceleration-and-deceleration timing belt 5 are arranged so that the roller 4 and the acceleration-and-deceleration timing belt 5 can be evacuated, above the weighing base 3, in the direction of X axis by the open-and-close unit. The open-and-close unit will be described in the following with reference to Fig. 2A and Fig. 2B.

Here, structure of the open-and-close unit and a procedure for weighing the mail 10 will be described in the following with reference to Fig. 2A and Fig. 2B.

Fig. 2A and Fig. 2B show a structure and an operation of the open-and-close unit of the mail weighing apparatus in the exemplary embodiment. Fig. 2A shows the open-and-close unit which is in a closed state, and Fig. 2B shows the open-and-close unit which is in an opened state.

The open-and-close unit includes an open-and-close timing belt (rotating belt) 7 and an open-and-close servomotor 8. The open-and-close timing belt 7 extends to a direction that meet right angle toward a direction of the conveying path, and can rotate as a rotating belt. The open-and-close servomotor 8 can drive the open-and-close timing belt 7 in one direction (clockwise direction) or the other direction opposite to the one direction (counterclockwise direction).

As shown in Fig. 1, Fig. 2A and Fig. 2B, pedestals, on which center axes of two rollers 4 are arranged respectively, are fixed to the open-and-close timing belt 7. That is, according to the exemplary embodiment, the right side roller 4 out of two rollers 4 is fixed to a belt which is corresponding to an upper portion of the open-and-close timing belt 7, and the left side roller 4 is fixed to a belt which is corresponding to a lower portion of the opening and closing belt 7, as shown in Fig. 2A and Fig. 2B. Moreover, the open-and-close servomotor 8 realizes the closed state (pinching state of the mail 10: Fig. 2A) through driving the open-and-close timing belt 7 in the counterclockwise direction in Fig. 2A and Fig. 2B. On the other hand, the open-and-close servomotor 8 realizes the opened state (evacuation state: Fig. 2B) through driving the open-and-close timing belt 7 in the clockwise direction in Fig. 2A and Fig. 2B. As a result, it is possible that the rollers 4 are separated each other, and touch each other, and pinch the mail 10 above the weighing base 3, which is positioned at the predetermined position, in response to the open-and-close servomotor 8 driving the open-and-close timing belt 7 in the clockwise direction or in the counterclockwise direction.

The mail 10, which passes the photoelectric sensor 9, is pinched by the rollers 4 and the acceleration-and-deceleration timing belt 5 which rotate in the closed state (Fig. 2A), and afterward the mail 10 is stopped moving on the weighing base 3. In accordance with the photoelectric sensor 9 detects an arrival of the mail 10, the open-and-close servomotor 8 drives the open-and-close timing belt 7 in the clockwise direction. As a result, the pair of the rollers 4 is arranged into the opened state (Fig. 2B). At this time, the weight sensor 2 weighs the mail 10 which is in a state of losing a support on the weighing base 3. After a predetermined interval (about 100 milliseconds) which is short but enough so that the weight sensor 2 can weigh the mail 10, the open-and-close servomotor 8 drives the open-and-close timing belt 7 in the counterclockwise direction. As a result, the pair of the rollers 4 is arranged into the closed state (Fig. 2A). Afterward, the acceleration-and-deceleration servomotor 6 conveys (discharge) the mail 10 in the +Z direction through driving the roller 4 via the acceleration-and-deceleration timing belt 5.

Here, since the mail 10 loses the support when the pair of the rollers 4 is arranged into the opened state (Fig. 2B), the center of the gravity of the mail 10 is shifted. As a result, a situation that the mail 10 is no longer able to maintain the upright state is caused. However, a series of the operations, which include the evacuating the pair of the rollers 4, weighing the mail 10 by the weight sensor 2 and pinching the mail 10 by the pair of the rollers 4, is completed in a short time before the mail 10, which is in the state of losing the support, begins to fall down. Therefore, according to the exemplary embodiment, the mail 10 does not lose the upright state on the weighing base 3.

It is noted that, even if the inclined mail 10 touches the roller 4 which is carrying out the opening and closing operation in the series of the operations, there is no problem if a weighing error due to the touch is within a permissible range. The reason is that, since the postal rate which is charged for mail permits a weight range, a weighing error such as the weighing error due to the touch is negligible practically.

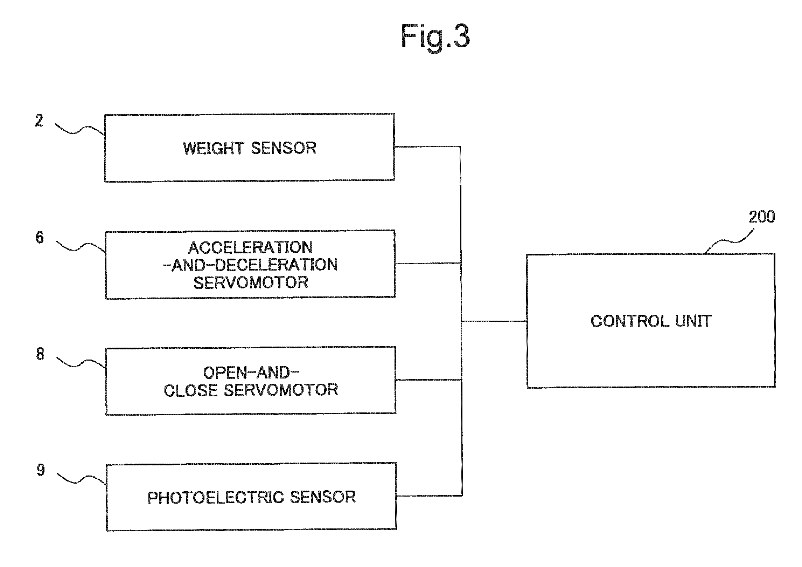

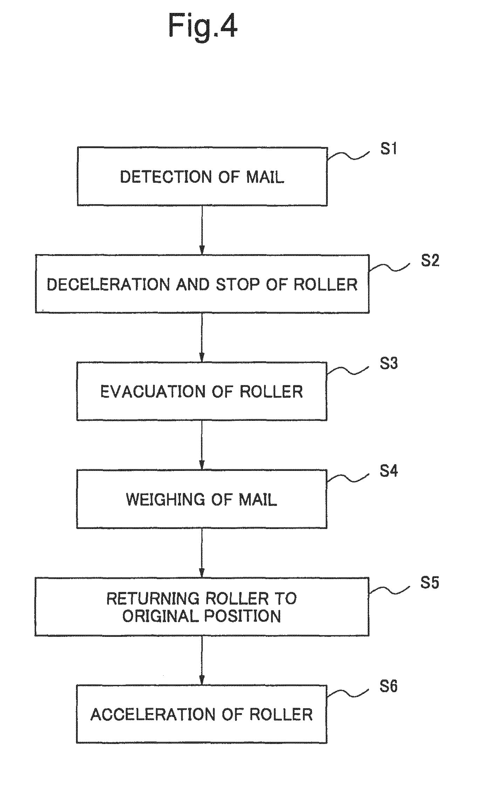

Next, structure and a control process of a control apparatus which realizes the operation of the mail weighing apparatus 1 will be described with reference to Fig. 3 and Fig. 4.

Fig. 3 is a block diagram showing system configuration of the mail weighing apparatus according to the exemplary embodiment of the present invention. A control unit 200 controls operations of the acceleration-and-deceleration servomotor 6 and the open-and-close servomotor 8 by using measurement results measured by the weight sensor 2 and the photoelectric sensor 9. As a result, the control unit 200 realizes the series of operations described above.

That is, Fig. 4 is a flowchart showing a control process of the mail weighing apparatus according to the exemplary embodiment of the present invention. First, it is assumed that, when the mail 10 passes the upstream side conveying unit, the control unit 200 controls a rotating speed of the acceleration-and-deceleration timing belt 5 and the roller 4 to be synchronized with a conveying speed of the upstream side conveying unit through driving the acceleration-and-deceleration servomotor 6.

As described above with reference to Fig. 1, the mail 10 which is the weighing object is conveyed one by one by the upstream side conveying unit (not shown in the figure) in the upright state on the conveying path toward the mail weighing apparatus 1. On the basis of an output signal of the photoelectric sensor 9, the control unit 200 detects that the mail 10, which is conveyed on the conveying path, is placed on the weighing base 3 (Step S1). At this time, since the acceleration-and-deceleration timing belt 5 and the roller 4 rotate so that the rotating speed of the acceleration-and-deceleration timing belt 5 and the roller 4 is synchronized with the conveying speed of the upstream side conveying unit, the mail 10 detected by the photoelectric sensor 9 is pinched by the pair of the rollers 4 on the weighing base 3.

In accordance with the detecting of the mail 10 in Step S1, the control unit 200 decelerates and stops the acceleration-and-deceleration servomotor 6 quickly after elapse of a predetermined time. Consequently, the pair of the rollers 4 is decelerated and stopped in a state that the mail 10 is placed on the weighing base 3 and the pair of the rollers 4 pinches the mail 10 as shown in Fig. 2A (Step S2).

Next, the control unit 200 drives the open-and-close servomotor 8 in the clockwise direction so as to rotate the open-and-close timing belt 7 in the clockwise direction. As a result, the pair of the rollers 4 is opened, by using the open-and-close servomotor 8 as a rotating axis, in the horizontal direction (that is, direction of X axis), which is horizontal to the direction of conveying the mail 10, and is arranged into the opened state (evacuating state) (Step S3). That is, by being separated from the mail 10 quickly, the pair of the rollers 4 shifts from the pinching state of the mail 10 to a state of being evacuated from a position above the weighing base 3 and the weight sensor 2.

Then, by acquiring the weighed result of the weight sensor 2, the control unit 200 obtains the weight of the mail 10, which is weighed when the mail 10 is in the state of being placed on the weighing base 3 and being stopped, and in the state of losing the support by the pair of the rollers 4 (Step S4). In this case, the weight which is weighed by the weight sensor 2 includes only the weight of the mail 10, since the pair of the rollers 4 is evacuated from the position above the weighing base 3 and the weight sensor 2.

When the control unit 200 acquires the weighing result on the mail 10, the control unit 200 drives the open-and-close servomotor 8 immediately in the counterclockwise direction. As a result, by using the acceleration-and-deceleration servomotor 6 as the rotating axis, the pair of the rollers 4 is closed in the horizontal direction, which is horizontal to the direction of conveying the mail 10, and is arranged into the closed state (pinching state) (Step S5). That is, the pair of rollers 4 returns to the original position above the weighing base 3 and the weight sensor 2 quickly and pinches the mail 10 again from the front side and the back side of the mail 10.

Here, as a timing when the pair of the roller 4 starts returning to the original position from the evacuating state shown in Fig. 2B, it is possible to apply, for example, a timing when the control unit 200 is notified of completion of the weighing operation of the weight sensor 2. Or, it may be applied a timing when a predetermined time is elapsed after the pair of roller 4 starts the evacuating operation from the state shown in Fig. 2A. In this case, as the predetermined time, it is possible to register an average time, which is required for the weight sensor 2 weighing the mail 10, in the control unit in advance. The reason is that, if the average time is set, it is possible to avoid the pair of the rollers 4 from pinching the mail 10 again before the weight sensor 2 completes to weigh the mail 10.

Afterward, the control unit 200 accelerates quickly the acceleration-and-deceleration servomotor 6 which is stopped, and consequently the pair of the rollers 4 also starts the rotation according to the acceleration (Step S6). As a result, the mail 10 is conveyed toward the downstream side.

The structure of the mail weighing apparatus 1 described above may be realized by dedicated hardware, but the structure of the mail weighing apparatus 1 is not limited to the structure realized by the dedicated hardware. That is, the operation of mail weighing apparatus unit 1 described above may be realized by using CPU (Central Processing Unit) executing a computer program which realizes the control processing function described with reference to Fig. 4.

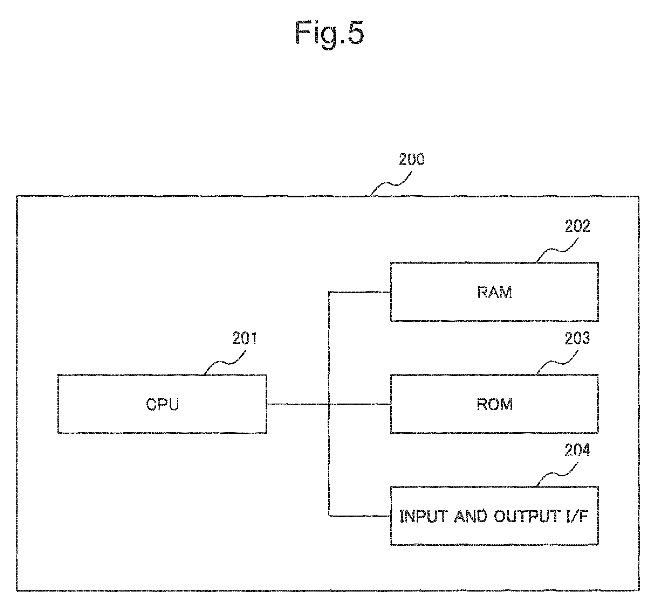

Fig. 5 is a block diagram exemplifying structure in which the control unit of the mail weighing apparatus according to the exemplary embodiment is realized by use of a computer. The control unit 200 shown in Fig. 5 includes CPU 201, RAM (Random Access Memory) 202, ROM (Read Only Memory) 203 and an input-and-output interface (I/F) 204. Then, CPU 201 realizes the series of operations of the mail weighing apparatus 1 described above with reading the computer program (Fig. 4) which is stored in, for example, ROM 203 in advance, and using RAM 202 as a work area. That is, CPU 201 realizes the operation described in each step shown in Fig. 4 through acquiring the measuring result, which is measured by the weight sensor 2 and the photoelectric sensor 9, via the input-and-output interface 204, and controlling the operations of the acceleration-and-deceleration servomotor 6 and the open-and-close servomotor 8.

That is, the present invention, which is described through exemplifying the exemplary embodiment, is realized through the computer program, which can realize the function described in the flowchart shown in Fig. 4, being provided to the control unit 200 and afterward through the computer program being read and executed by CPU 201. Moreover, it is possible that the computer program, which is provided to the control unit 200, is stored in a recording device (recording medium) such as a temporary memory (RAM 202) which can be read and written, ROM 203, a hard disk apparatus (not shown in the figure), or the like. Moreover, it may be possible that the computer program is provided to CPU 201 by use of a removable storage medium such as an IC card, a memory card, a floppy disk (registered trademark), a magneto-laser disk, DVD, CD or the like. In this case, the present invention is realized by a code configured the computer program or the above-described various storage media.

The above-mentioned mail weighing apparatus 1 according to the exemplary embodiment has the function to decelerate and to stop and to accelerate the mail 10 quickly, and the function to separate and to pinch the mail 10 quickly in the structure of weighing the mail 10 which is conveyed in the upright state on the conveying path. As a result, according to the exemplary embodiment, it is not necessary, differently from the mechanism which is described as the related art with reference to Fig. 6, to weigh the mail in a situation that the mail is being conveyed. Therefore, the mail weighing apparatus 1 according to the exemplary embodiment realizes the mail weighing apparatus to weigh the mail, which is conveyed in the upright state, accurately without enlarging a whole of the apparatus.

That is, according to the mail weighing apparatus 1 of the exemplary embodiment, it is possible to realize compact structure, whose long side length (length in the direction of the conveying path) is short in comparison with, for example, the mail weighing apparatus (Fig. 6) described as the related art. Moreover, since according to the mail weighing apparatus 1 of the exemplary embodiment, the pair of the rollers 4 is evacuated from the position above the weighing base 3 and the weight sensor 2 in the state that the mail is stopped on the conveying path, it is possible to weigh only the mail 10 accurately, and to minimize the influence on weighing accuracy due to the vibration of the roller 4, the acceleration-and-deceleration timing belt 5, the acceleration-and-deceleration servomotor 6 or the like which is included in the conveying unit.

As mentioned above, the present invention has been described with using the exemplary embodiment as the example. However, the present invention is not limited to the exemplary embodiment described above. That is, it is possible to apply various embodiments, which a person skilled in the art can understand, without departing from the sprit and scope of the present invention.

This application is based upon and claims the benefit of priority from Japanese Patent Application No. 2009-250145, filed on October 30, 2009, the disclosure of which is incorporated herein in its entirety by reference.

### Industrial Applicability

The present invention can be applied to not only the mail weighing apparatus which is exemplified in the exemplary embodiment, but also a paper sheet weighing apparatus which weighs various paper sheet such as a sealed letter, a pamphlet, a mail or the like.

### Description of the Codes

- 1: mail weighing apparatus
- 2 and 102: weight sensor
- 3 and 103: weighing base
- 4: roller
- 5: acceleration-and-deceleration timing belt (rotating belt)
- 6: acceleration-and-deceleration servomotor
- 7: open-and-close timing belt (rotating belt)
- 8: open-and-close servomotor
- 9 and 106: photoelectric sensor
- 10: mail (paper sheet)
- 101: conveying belt
- 104 and 107: conveying roller
- 105: conveying servomotor
- 200: control unit
- 201: CPU
- 202: RAM
- 203: ROM
- 204: input-and-output interface (I/F)

## Claims

1. A paper sheet weighing apparatus, **characterized by** comprising:
first handling means for pinching a paper sheet which is conveyed on a conveying path and stopping movement of the paper sheet at a predetermined position in a state that the paper sheet is upright; and
weighing means for weighing the paper sheet which is stopped at the predetermined position, wherein
the first handling means conveys the paper sheet, which is weighed by the weighing means, outward from the predetermined position.

2. The paper sheet weighing apparatus according to Claim 1, **characterized in that**
the first handling means includes a pair of pinching members which pinches the paper sheet from both sides that meet right angle toward a direction of the conveying path respectively; and
the paper sheet weighing apparatus further comprises second handling means for separating the pair of the pinching members from the paper sheet in accordance with the pair of the pinching members is stopped movement at the predetermined position in the state that the paper sheet is upright, and afterward driving, in response to the weighing means weighs the paper sheet, the pair of the pinching members so that the pair of the pinching members pinches the paper sheet again.

3. The paper sheet weighing apparatus according to Claim 2, **characterized by** further comprising:
control means for controlling operations of the first and the second handling means, wherein
after the pair of the pinching members of the first handling means is separated from the paper sheet, the control means controls the second handling means, in response to a completion of weighing the paper sheet by the weighing means, so that the pair of the pinching members pinches the paper sheet again.

4. The paper sheet weighing apparatus according to Claim 2, **characterized by** further comprising:
control means for controlling operations of the first and the second handling means, wherein
after the pair of the pinching members of the first handling means is separated from the paper sheet, the control means controls the second handling means so that the pair of the pinching members pinches the paper sheet again after a predetermined time elapses.

5. The paper sheet weighing apparatus according to Claim 4, **characterized in that**
the predetermined time is an average time required for weighing of the paper sheet by the weighing means.

6. The paper sheet weighing apparatus according to any one of Claim 2 to Claim 5, **characterized in that**
the pair of the pinching members of the first handling means includes a pair of rollers positioned oppositely each other, and
the first handling means stops the paper sheet in the state that the paper sheet is upright, and conveys the paper sheet outward by using the rollers.

7. The paper sheet weighing apparatus according to Claim 6, **characterized in that**
the second handling means includes:
a rotating belt which extends to a direction, which meets the conveying path at the right angle, and enable to rotate, and
a motor which enable to drive the rotating belt in one direction or the other direction opposite to the one direction, wherein
the pair of the rollers which is separated each other, or touches each other, and pinches the paper sheet above the predetermined position in response to the rotating belt is droved in the one direction or in the other direction opposite to the one direction by the motor.

8. A paper sheet weighing method, **characterized by** comprising:
pinching a paper sheet, which is conveyed on a conveying path, by using a first handling means, and stopping movement of the paper sheet at a predetermined position in a state that the paper sheet is upright;
weighing the paper sheet, which is stopped at the predetermined position, by using a weighing means; and
conveying the paper sheet, which is weighed by the weighing means, outward from the predetermined position by using the first handling means,

9. A computer program to control an operation of a paper sheet weighing apparatus which weighs a paper sheet by using a first handling means and a weighing means, the computer program causing a computer to realize:
a function to pinch the paper sheet, which is conveyed on a conveying path, by using the first handling means, and to stop movement of the paper sheet at a predetermined position in a state that the paper sheet is upright;
a function to weigh the paper sheet, which is stopped at the predetermined position, by using the weighing means; and
a function to convey the paper sheet, which is weighed by the weighing means, outward from the predetermined position by using the first handling means.
